# EUROPEAN PATENT APPLICATION

(11) **EP 4 202 625 A1**
(43) Date of publication of application: **28.06.2023**
(21) Application number: 21858025.6
(22) Date of filing: 11.06.2021
(51) Int. Cl.: G06F 3/06, G06F 11/20, G06F 13/10, G06F 13/14, G06F 16/13

(54) **INFORMATION PROCESSING DEVICE, INFORMATION PROCESSING METHOD, INFORMATION PROCESSING PROGRAM, AND MAGNETIC TAPE CARTRIDGE**

(30) Priority: 21.08.2020 JP 2020140420; 20.11.2020 JP 2020193236
(71) Applicant: FUJIFILM Corporation, Tokyo 106-8620 (JP)
(72) Inventor: OISHI, Yutaka, Tokyo 106-8620 (JP); KONDO, Michitaka, Tokyo 106-8620 (JP); UNO, Yuko, Tokyo 106-8620 (JP)
(74) Representative: Klunker IP Patentanwälte PartG mbB
(86) International application number: PCT/JP2021/022332
(87) International publication number: WO 2022/038874

(57) **Abstract**

An information processing apparatus performs a control of recording identification information of a storage pool in at least one of a management area of a magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group and being the same information between storage pools in pool groups different from each other according to a multiplexing order of the storage pool.

## Description

### BACKGROUND OF THE INVENTION

### 1. Field of the Invention

The present disclosure relates to an information processing apparatus, an information processing method, an information processing program, and a magnetic tape cartridge.

### 2. Description of the Related Art

A technique of providing a logical volume to a user by configuring a storage pool with a plurality of magnetic tapes and assigning the storage pool to a logical volume is disclosed (refer to JP2008-250667A and JP2010-108341A).

### SUMMARY OF THE INVENTION

In the techniques described in JP2008-250667A and JP2010-108341A, identification information such as a pool number or a pool identifier (ID) is given to the storage pool. In addition, in the techniques described in JP2008-250667A and JP2010-108341A, different identification information is given for each storage pool. As a result, in the techniques described in JP2008-250667A and JP2010-108341A, it is difficult to specify a group of a plurality of magnetic tapes corresponding to each storage pool using only the identification information of the storage pool.

For example, in an environment in which a pool group obtained by grouping a plurality of storage pools is created, in a case of accessing a specific storage pool, a storage pool can be specified by a combination of identification information of the pool group and identification information of the storage pool. In this case, identification information which is unique in the pool group is given to the storage pool. On the other hand, in a case where the pool groups are different from each other, the same identification information may be given.

The present disclosure has been made in view of the above circumstances, and an object of the present disclosure is to provide an information processing apparatus, an information processing method, an information processing program, and a magnetic tape cartridge capable of easily specifying a group of a plurality of magnetic tapes corresponding to each storage pool from identification information of the storage pool.

According to the present disclosure, there is provided an information processing apparatus comprising: at least one processor, in which the processor is configured to perform a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

In the information processing apparatus according to the present disclosure, the identification information may be different information between users different from each other, between buckets different from each other, or between regions different from each other, in a system.

Further, in the information processing apparatus according to the present disclosure, all magnetic tapes included in each of a plurality of storage pools belonging to one pool group may be loaded in the same logical library among a plurality of logical libraries obtained by logically dividing a tape library.

Further, in the information processing apparatus according to the present disclosure, in a plurality of availability zones, pieces of identification information of the corresponding pool groups may be the same information.

Further, according to the present disclosure, there is provided an information processing method executed by a processor of an information processing apparatus, the method comprising: performing a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

Further, according to the present disclosure, there is provided an information processing program causing a processor of an information processing apparatus to execute a process comprising: performing a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

Further, according to the present disclosure, there is provided a magnetic tape cartridge comprising: a magnetic tape; and a recording medium other than the magnetic tape, in which identification information of a storage pool which includes a plurality of magnetic tapes and to which the magnetic tape cartridge belongs is recorded in at least one of a management area of the magnetic tape or the recording medium, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

According to the present disclosure, it is possible to easily specify a group of a plurality of magnetic tapes corresponding to each storage pool from the identification information of the storage pool.

### BRIEF DESCRIPTION OF THE DRAWINGS

Fig. 1 is a block diagram illustrating an example of a configuration of a recording and reproducing system according to a first embodiment.
Fig. 2 is a block diagram illustrating an example of a configuration of a magnetic tape cartridge.
Fig. 3 is a block diagram illustrating an example of a configuration of a tape drive.
Fig. 4 is a block diagram illustrating an example of a hardware configuration of an information processing apparatus.
Fig. 5 is a diagram for explaining a storage pool and a pool group.
Fig. 6 is a block diagram illustrating an example of a functional configuration of the information processing apparatus.
Fig. 7 is a diagram illustrating an example of identification information of a storage pool and identification information of a pool group according to the first embodiment.
Fig. 8 is a flowchart illustrating an example of identification information recording processing.
Fig. 9 is a block diagram illustrating an example of a configuration of a recording and reproducing system according to a second embodiment.
Fig. 10 is a diagram illustrating an example of identification information of a storage pool and identification information of a pool group according to a second embodiment.

### DESCRIPTION OF THE PREFERRED EMBODIMENTS

Hereinafter, an example of an embodiment for performing a technique according to the present disclosure will be described in detail with reference to the drawings.

### [First Embodiment]

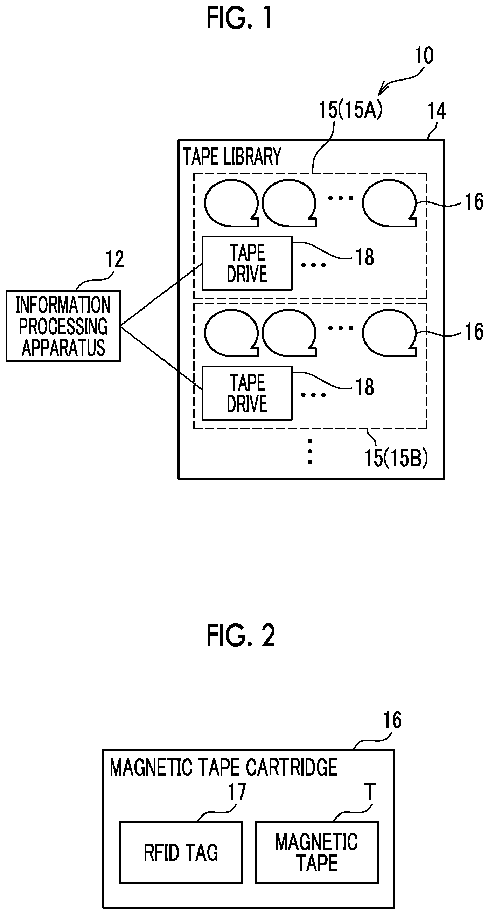

First, a configuration of a recording and reproducing system 10 according to the present embodiment will be described with reference to Fig. 1. As illustrated in Fig. 1, the recording and reproducing system 10 includes an information processing apparatus 12 and a tape library 14. Examples of the information processing apparatus 12 include a server computer and the like.

The tape library 14 includes a plurality of slots (not illustrated) and a plurality of tape drives 18, and a magnetic tape cartridge 16 is loaded in each slot. Each tape drive 18 is connected to the information processing apparatus 12. Examples of the magnetic tape cartridge 16 include a linear tape-open (LTO) tape cartridge.

Further, the tape library 14 is divided into logical libraries 15 that are a plurality of logical tape libraries. In the following, in a case of distinguishing each logical library 15, an alphabet is added to an end of the reference numeral, such as the logical library 15A and the logical library 15B.

Each logical library 15 includes a plurality of slots and a plurality of tape drives 18. In the present embodiment, a case where the number of slots and the number of tape drives 18 included in each logical library 15 are the same will be described. On the other hand, the number of slots and the number of tape drives 18 included in each logical library 15 may be different from each other.

Next, a configuration of the magnetic tape cartridge 16 according to the present embodiment will be described with reference to Fig. 2. As illustrated in Fig. 2, the magnetic tape cartridge 16 includes a magnetic tape T on which information is recorded by magnetism and a radio frequency identifier (RFID) tag 17 that can record and read information in a non-contact manner by wireless communication or the like. The RFID tag 17 is an example of a recording medium other than the magnetic tape T that is provided in the magnetic tape cartridge 16. Identification information which is unique in a system is given to the magnetic tape cartridge 16, and the identification information is recorded in the RFID tag 17.

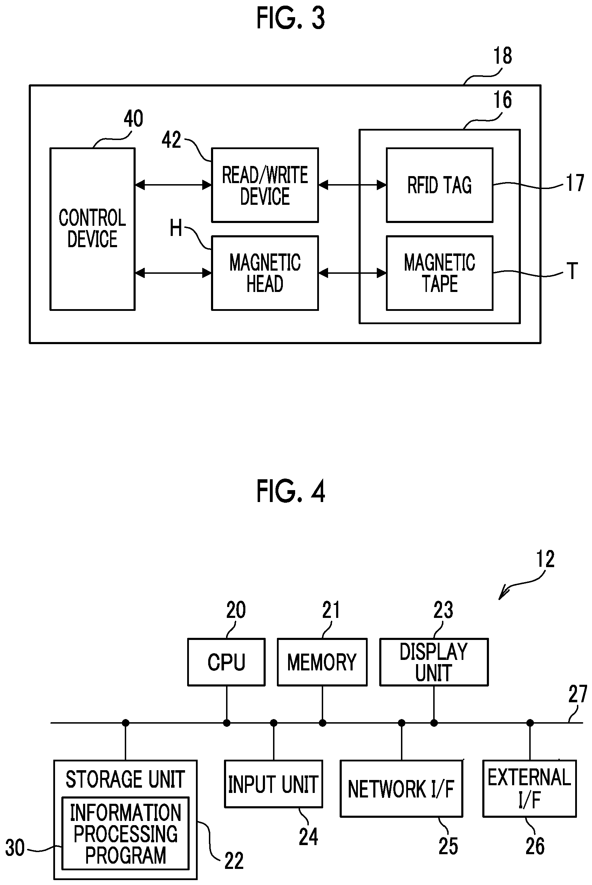

Next, a configuration of the tape drive 18 according to the present embodiment will be described with reference to Fig. 3. As illustrated in Fig. 3, the tape drive 18 includes a control device 40, a read/write device 42, and a magnetic head H. In a case where writing or reading of data is performed on the magnetic tape T of the magnetic tape cartridge 16, the magnetic tape cartridge 16 is loaded into the tape drive 18. In addition, even in a case where writing or reading of data is performed on the RFID tag 17 of the magnetic tape cartridge 16, the magnetic tape cartridge 16 is loaded into the tape drive 18.

The control device 40 includes a processor such as a programmable logic device (PLD), a memory as a temporary memory area, a non-volatile storage unit, and the like. The control device 40 performs transmission and reception of data to and from the information processing apparatus 12, control of the read/write device 42 and the magnetic head H, and the like.

The read/write device 42 reads information recorded in the RFID tag 17 in a non-contact manner and outputs the read information to the control device 40, under a control of the control device 40. In addition, the read/write device 42 records information in the RFID tag 17 in a non-contact manner under a control of the control device 40. Examples of the read/write device 42 include an RFID reader/writer. The magnetic head H includes a recording and reproducing element that performs writing and reading of data on the magnetic tape T.

Next, a hardware configuration of the information processing apparatus 12 according to the present embodiment will be described with reference to Fig. 4. As illustrated in Fig. 4, the information processing apparatus 12 includes a central processing unit (CPU) 20, a memory 21 as a temporary memory area, and a non-volatile storage unit 22. Further, the information processing apparatus 12 includes a display unit 23 such as a liquid crystal display, an input unit 24 such as a keyboard and a mouse, a network interface (I/F) 25 connected to a network, and an external I/F 26 to which each tape drive 18 is connected. The CPU 20, the memory 21, the storage unit 22, the display unit 23, the input unit 24, the network I/F 25, and the external I/F 26 are connected to a bus 27. The CPU 20 controls the control device 40 of the tape drive 18 via the external I/F 26.

The storage unit 22 is realized by a hard disk drive (HDD), a solid state drive (SSD), a flash memory, or the like. An information processing program 30 is stored in the storage unit 22 as a storage medium. The CPU 20 reads the information processing program 30 from the storage unit 22, develops the read information processing program 30 in the memory 21, and executes the developed information processing program 30.

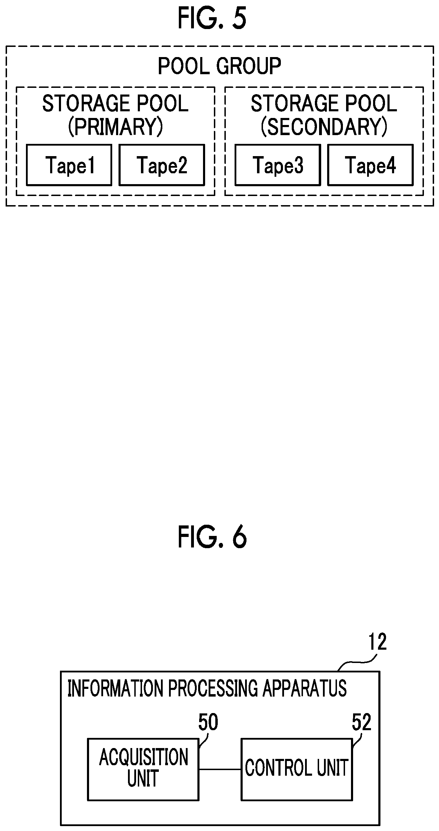

Next, a storage pool including the magnetic tapes T of the plurality of magnetic tape cartridges 16 according to the present embodiment and a pool group including a plurality of storage pools will be described with reference to Fig. 5. As illustrated in Fig. 5, one storage pool is configured by the magnetic tapes T of the plurality of magnetic tape cartridges 16. In the present embodiment, the magnetic tape T of each magnetic tape cartridge 16 belongs to one storage pool. Fig. 5 illustrates a case where the number of the magnetic tape cartridges 16 included in one storage pool is two. On the other hand, the number of the magnetic tape cartridges 16 included in one storage pool is not limited to two.

Further, as illustrated in Fig. 5, one pool group is configured by a plurality of storage pools. In the present embodiment, a case where two storage pools are included in one pool group will be described. In addition, in the present embodiment, the same data is recorded in two storage pools included in the same pool group by being multiplexed with a multiplicity of "2". That is, a first multiplexed storage pool included in the pool group is a storage pool in which primary data is recorded, and a second multiplexed storage pool included in the pool group is a storage pool in which secondary data is recorded. In the present embodiment, each storage pool belongs to one pool group.

Further, the pool group is assigned to a logical volume of the information processing apparatus 12, and the logical volume is provided to a user of the recording and reproducing system 10. Therefore, in a case where a user terminal transmits data to be written to the information processing apparatus 12, the information processing apparatus 12 performs a control of multiplexing and recording the data in the two storage pools included in the pool group corresponding to a logical volume of a writing destination.

The multiplicity in a case where the data is recorded in the pool group is not limited to 2, and may be 1 or 3 or more. For example, in a case where the multiplicity is 1, the storage pool included in each pool group is one storage pool for primary data. Further, for example, in a case where the multiplicity is 3, the storage pools included in each pool group are three storage pools of a storage pool for primary data, a storage pool for secondary data, and a spare storage pool.

Next, a functional configuration of the information processing apparatus 12 according to the present embodiment will be described with reference to Fig. 6. As illustrated in Fig. 6, the information processing apparatus 12 includes an acquisition unit 50 and a control unit 52. In a case where the CPU 20 executes the information processing program 30, the information processing apparatus 12 functions as the acquisition unit 50 and the control unit 52.

The acquisition unit 50 acquires identification information of the storage pool and identification information of the pool group, the identification information being input by an administrator of the recording and reproducing system 10. The acquisition unit 50 may acquire identification information of the storage pool and identification information of the pool group, from pieces of setting information of the storage pool and the pool group that are stored in the storage unit 22.

The identification information of the storage pool and the identification information of the pool group according to the present embodiment are assigned according to the following rules.
(1) The identification information of the pool group is unique in the system.
(2) The identification information of the storage pool is different for each storage pool in the pool group.
(3) The identification information of the storage pool is the same between the pool groups different from each other according to a multiplexing order of the storage pool. Here, the multiplexing order means that, for example, the storage pool in which primary data is recorded is the first multiplexed storage pool and the storage pool in which secondary data is recorded is the second multiplexed storage pool.
(4) The identification information of the storage pool is different between different users in the system.

The identification information of the storage pool and the identification information of the pool group may be generated by the information processing apparatus 12 according to the rules.

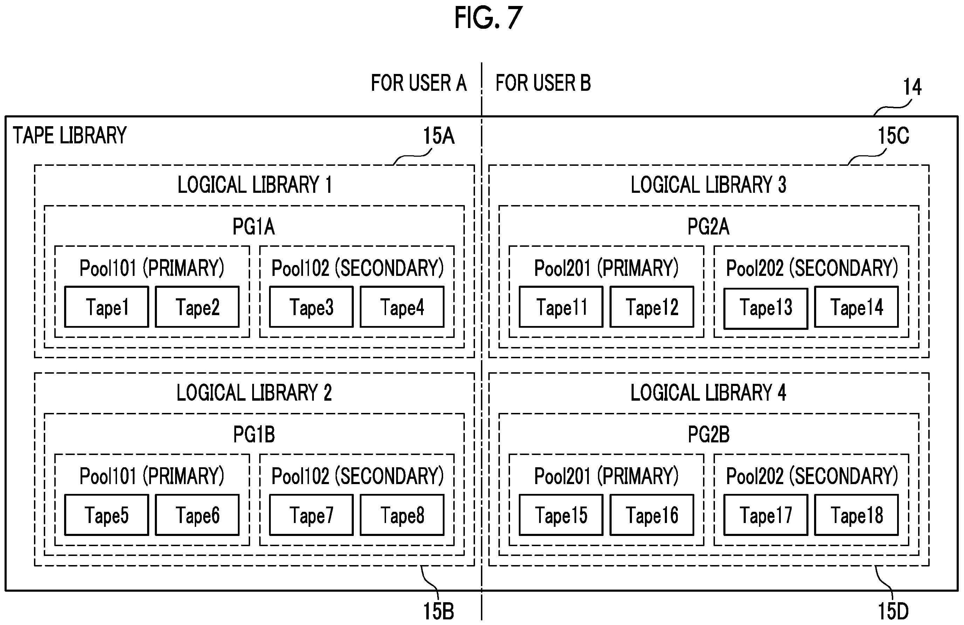

Fig. 7 illustrates an example of the identification information of the storage pool and the identification information of the pool group that are assigned according to the above rules. As illustrated in Fig. 7, four magnetic tape cartridges 16 are respectively loaded in the slots of the logical libraries 15A to 15D. Further, in the four magnetic tape cartridges 16 loaded in each of the slots of the logical libraries 15A to 15D, two magnetic tape cartridges belong to the storage pools for primary data, and the remaining two magnetic tape cartridges belong to the storage pools for secondary data. Further, the storage pool for primary data and the storage pool for secondary data that are included in each of the logical libraries 15A to 15D belong to one pool group.

Further, the logical libraries 15A and 15B are logical libraries assigned for a user A, and the logical libraries 15C and 15D are logical libraries assigned for a user B different from the user A.

According to the rule (1), the identification information of each pool group is unique in the system, such as "PG1A", "PG1B", "PG2A", and "PG2B".

According to the rule (2), in the pool group "PG1A", pieces of the identification information of the storage pools are different for each storage pool, such as "Pool101" and "Pool102". Similarly, in the pool group "PG1B", pieces of the identification information of the storage pools are different for each storage pool, such as "Pool101" and "Pool102". Similarly, in the pool group "PG2A", pieces of the identification information of the storage pools are different for each storage pool, such as "Pool201" and "Pool202". Similarly, in the pool group "PG2B", pieces of the identification information of the storage pools are different for each storage pool, such as "Pool201" and "Pool202".

According to the rule (3), in the pool group "PG1A" and the pool group "PG1B", the identification information of the storage pool in which primary data is recorded, that is, the first multiplexed storage pool is the same "Pool101". In addition, in the pool group "PG1A" and the pool group "PG1B", the identification information of the storage pool in which secondary data is recorded, that is, the second multiplexed storage pool is the same "Pool102".

Similarly, in the pool group "PG2A" and the pool group "PG2B", the identification information of the storage pool in which primary data is recorded, that is, the first multiplexed storage pool is the same "Pool201". In addition, in the pool group "PG2A" and the pool group "PG2B", the identification information of the storage pool in which secondary data is recorded, that is, the second multiplexed storage pool is the same "Pool202".

According to the rule (4), pieces of the identification information "Pool101" and "Pool102" of the storage pools for the user A and pieces of the identification information "Pool201" and "Pool202" of the storage pools for the user B are different from each other.

Further, as illustrated in Fig. 7, all the magnetic tape cartridges 16 included in each of the plurality of storage pools belonging to one pool group are loaded in the same logical library 15 among the plurality of logical libraries 15. In other words, one pool group does not cross the plurality of logical libraries 15.

The control unit 52 performs a control of recording the identification information of the storage pool and the identification information of the pool group, which are acquired by the acquisition unit 50, in the RFID tag 17 of the magnetic tape cartridge 16 belonging to the storage pool of the pool group, the storage pool being indicated by the identification information of the storage pool, and the pool group being indicated by the identification information of the pool group. The control unit 52 may perform a control of recording the identification information of the storage pool and the identification information of the pool group in a management area of the magnetic tape T that is for recording management information, instead of the RFID tag 17. In addition, the control unit 52 may perform a control of recording the identification information of the storage pool and the identification information of the pool group in both the RFID tag 17 and the management area of the magnetic tape T that is for recording management information.

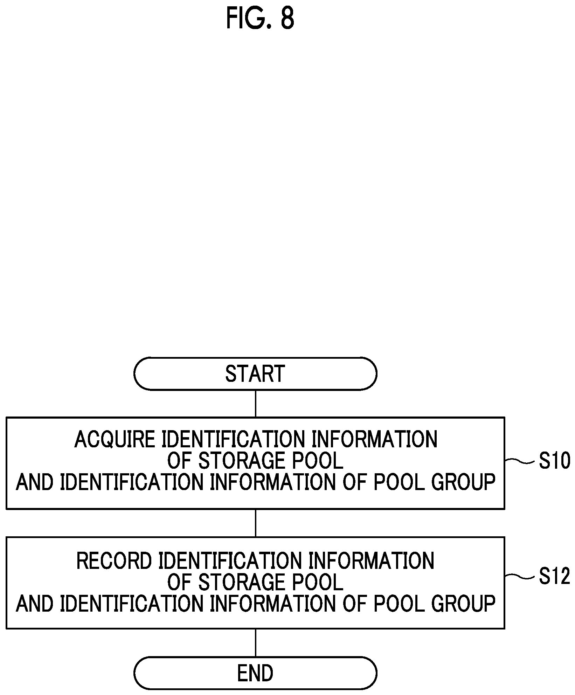

Next, an operation of the information processing apparatus 12 according to the present embodiment will be described with reference to Fig. 8. In a case where the CPU 20 executes the information processing program 30, identification information recording processing illustrated in Fig. 8 is executed. The identification information recording processing illustrated in Fig. 8 is executed, for example, in a case where an instruction to start execution is input via the input unit 24 by an administrator.

In step S10 of Fig. 8, the acquisition unit 50 acquires identification information of the storage pool and identification information of the pool group, the identification information being input by an administrator of the recording and reproducing system 10.

In step S12, the control unit 52 performs a control of recording the identification information of the storage pool and the identification information of the pool group, which are acquired in step S10, in the RFID tag 17 of the magnetic tape cartridge 16 belonging to the storage pool of the pool group, the storage pool being indicated by the identification information of the storage pool, and the pool group being indicated by the identification information of the pool group. In a case where processing of step S12 is completed, the identification information recording processing is completed.

As described above, according to the present embodiment, by confirming the identification information of the storage pool and the identification information of the pool group that are recorded in the RFID tag 17 of the magnetic tape cartridge 16, it is possible to recognize whether or not the magnetic tape cartridges 16 are magnetic tape cartridges of the storage pools of the same user, whether or not the magnetic tape cartridges 16 are magnetic tape cartridges having the same multiplexing order, and whether or not the magnetic tape cartridges 16 are magnetic tape cartridges loaded in the same logical library 15.

### [Second Embodiment]

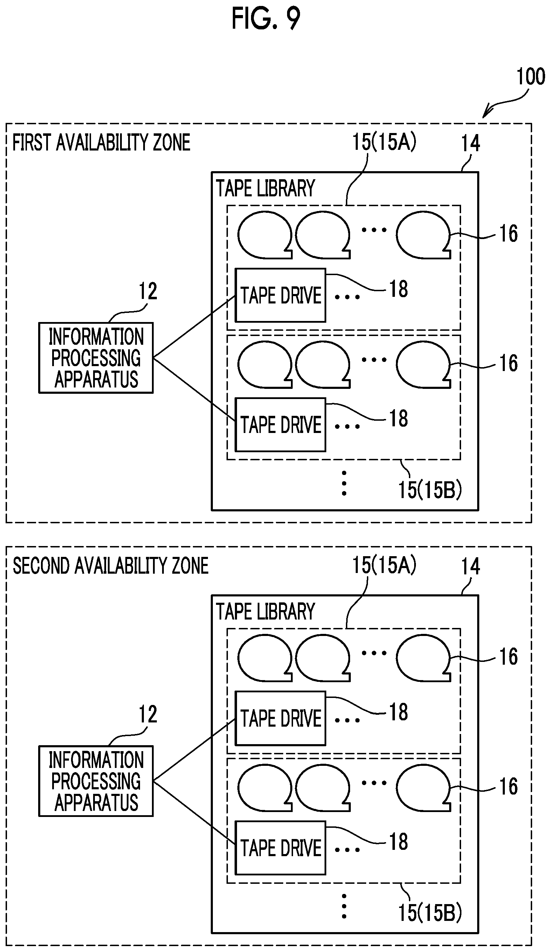

A configuration of a recording and reproducing system 100 according to the present embodiment will be described with reference to Fig. 9. The same components as components in the first embodiment are denoted by the same reference numerals, and a description thereof will be omitted. As illustrated in Fig. 9, the recording and reproducing system 100 includes two sets of the information processing apparatuses 12 and the tape libraries 14. A first set of the information processing apparatus 12 and the tape library 14 is provided in a first availability zone, and a second set of the information processing apparatus 12 and the tape library 14 is provided in a second availability zone.

The availability zone corresponds to a data center in which the information processing apparatus 12 and the tape library 14 are provided. The first availability zone and the second availability zone belong to the same region. Thus, geographical redundancy in the region is performed. Here, the region means a region where a storage as a saving destination of an obj ect is provided. For example, in a case of a Tokyo region, a plurality of availability zones are provided in Tokyo and neighboring areas of Tokyo. Thus, even in a case where at least one availability zone is unavailable due to a disaster or the like, the system can be continuously used.

The hardware configuration of the information processing apparatus 12 according to the present embodiment is the same as the configuration in the first embodiment, and thus a description thereof will be omitted. Further, in the functional configuration of the information processing apparatus 12 according to the present embodiment, only a rule for assigning the identification information of the storage pool and the identification information of the pool group is different, and the functions are the same as the functions in the first embodiment. Thus, a description thereof will be omitted. In the following, a rule for assigning the identification information of the storage pool and the identification information of the pool group will be described.

The identification information of the storage pool and the identification information of the pool group according to the present embodiment are assigned according to the following rules.
(1) The identification information of the pool group is unique in the system with the following exceptions. As described above, in the present embodiment, geographical redundancy is performed by the two availability zones. Therefore, the information processing apparatus 12 and the tape library 14 in the first availability zone and the information processing apparatus 12 and the tape library 14 in the second availability zone have the same configuration. In the present embodiment, in the first availability zone and the second availability zone, pieces of the identification information of the corresponding pool groups are the same information.
(2) The identification information of the storage pool is different for each storage pool in the pool group.
(3) The identification information of the storage pool is the same between the pool groups different from each other according to a multiplexing order of the storage pool. Here, the multiplexing order means that, for example, the storage pool in which primary data is recorded is the first multiplexed storage pool and the storage pool in which secondary data is recorded is the second multiplexed storage pool.
(4) The identification information of the storage pool is different between different users in the system.

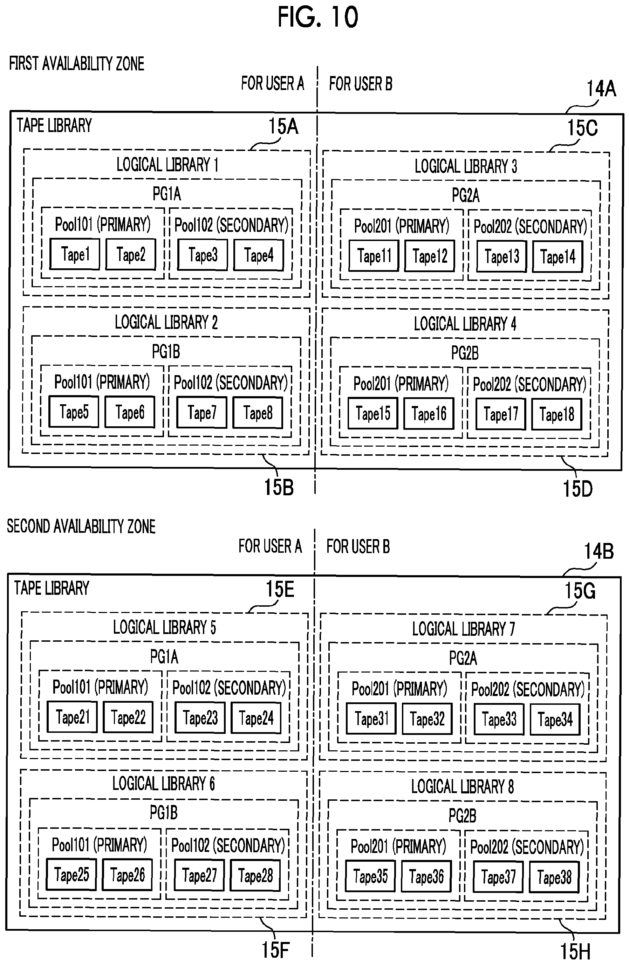

Fig. 10 illustrates an example of the identification information of the storage pool and the identification information of the pool group that are assigned according to the above rules. As illustrated in Fig. 10, four magnetic tape cartridges 16 are respectively loaded in the slots of the logical libraries 15A to 15D of the tape library 14A of the first availability zone. Further, in the four magnetic tape cartridges 16 loaded in each of the slots of the logical libraries 15A to 15D, two magnetic tape cartridges belong to the storage pools for primary data, and the remaining two magnetic tape cartridges belong to the storage pools for secondary data. Further, the storage pool for primary data and the storage pool for secondary data that are included in each of the logical libraries 15A to 15D belong to one pool group. Further, the logical libraries 15E to 15H of the tape library 14B of the second availability zone have the same configuration as the logical libraries 15A to 15D of the first availability zone.

According to the rule (1), the identification information of each pool group of the first availability zone is unique in the system, such as "PG1A", "PG1B", "PG2A", and "PG2B". Further, according to the rule (1), the identification information of each pool group of the second availability zone is the same information as the identification information of the corresponding pool group of the first availability zone, such as "PG1A", "PG1B", "PG2A", and "PG2B".

According to the rule (2), in the pool group "PG1A", pieces of the identification information of the storage pools are different for each storage pool, such as "Pool101" and "Pool102". Similarly, in the pool group "PG1B", pieces of the identification information of the storage pools are different for each storage pool, such as "Pool101" and "Pool102". Similarly, in the pool group "PG2A", pieces of the identification information of the storage pools are different for each storage pool, such as "Pool201" and "Pool202". Similarly, in the pool group "PG2B", pieces of the identification information of the storage pools are different for each storage pool, such as "Pool201" and "Pool202".

According to the rule (3), in the pool group "PG1A" and the pool group "PG1B", the identification information of the storage pool in which primary data is recorded, that is, the first multiplexed storage pool is the same "Pool101". In addition, in the pool group "PG1A" and the pool group "PG1B", the identification information of the storage pool in which secondary data is recorded, that is, the second multiplexed storage pool is the same "Pool102".

Similarly, in the pool group "PG2A" and the pool group "PG2B", the identification information of the storage pool in which primary data is recorded, that is, the first multiplexed storage pool is the same "Pool201". In addition, in the pool group "PG2A" and the pool group "PG2B", the identification information of the storage pool in which secondary data is recorded, that is, the second multiplexed storage pool is the same "Pool202".

According to the rule (4), pieces of the identification information "Pool101" and "Pool102" of the storage pools for the user A and pieces of the identification information "Pool201" and "Pool202" of the storage pools for the user B are different from each other.

The operation of the information processing apparatus 12 according to the present embodiment is the same as the operation in the first embodiment, and thus a description thereof will be omitted.

As described above, according to the present embodiment, in a plurality of availability zones, pieces of the identification information of the corresponding pool groups are the same information. Therefore, it is possible to determine whether or not the pool group is a corresponding pool group between the availability zones based on the identification information of the pool group.

In the second embodiment, the storage pools may not be the same between the availability zones. For example, in Fig. 10, only "Pool101" may belong to "PG1A" of the first availability zone, and only "Pool102" may belong to "PG1A" of the second availability zone. Even in this case, since "Pool 101" is a storage pool for recording primary data and "Pool 102" is a storage pool for recording secondary data, geographical redundancy can be performed.

In addition, in the second embodiment, the number of the availability zones is not limited to two, and may be three or more.

In addition, in each of the embodiments, a case where the identification information of the storage pool is different information between different users in the system has been described. On the other hand, the present disclosure is not limited thereto. For example, the identification information of the storage pool may be different information between different buckets in the system. Here, the bucket means a virtual accommodation area associated with a memory area as a saving destination of an object. The bucket may also be referred to as a container. In a case of saving an object, a user designates a bucket as a saving destination of the object. In addition, for example, the identification information of the storage pool may be different information between different regions in the system. Here, the region means a region where a storage as a saving destination of an object is provided. The user designates a region in a case of creating a bucket.

Further, in each of the embodiments, for example, as a hardware structure of a processing unit that executes various processing such as the acquisition unit 50 and the control unit 52, the following various processors may be used. The various processors include, as described above, a CPU, which is a general-purpose processor that functions as various processing units by executing software (program), and a dedicated electric circuit, which is a processor having a circuit configuration specifically designed to execute a specific processing, such as a programmable logic device (PLD) or an application specific integrated circuit (ASIC) that is a processor of which the circuit configuration may be changed after manufacturing such as a field programmable gate array (FPGA).

One processing unit may be configured by one of these various processors, or may be configured by a combination of two or more processors of the same type or different types (for example, a combination of a plurality of FPGAs or a combination of a CPU and an FPGA). Further, the plurality of processing units may be configured by one processor.

As an example in which the plurality of processing units are configured by one processor, firstly, as represented by a computer such as a client and a server, a form in which one processor is configured by a combination of one or more CPUs and software and the processor functions as the plurality of processing units may be adopted. Secondly, as represented by a system on chip (SoC) or the like, a form in which a processor that realizes the function of the entire system including the plurality of processing units by one integrated circuit (IC) chip is used may be adopted. As described above, the various processing units are configured by using one or more various processors as a hardware structure.

Further, as the hardware structure of the various processors, more specifically, an electric circuit (circuitry) in which circuit elements such as semiconductor elements are combined may be used.

Further, in each of the embodiments, an example in which the information processing program 30 is stored (installed) in the storage unit 22 in advance has been described. On the other hand, the present disclosure is not limited thereto. The information processing program 30 may be provided by being recorded in a recording medium such as a compact disc read only memory (CD-ROM), a digital versatile disc read only memory (DVD-ROM), or a Universal Serial Bus (USB) memory. Further, the information processing program 30 may be downloaded from an external apparatus via a network.

In the disclosure of Japanese Patent Application No. 2020-140420, filed August 21, 2020 and the disclosure of Japanese Patent Application No. 2020-193236, filed November 20, 2020, the entire contents of each of which are incorporated herein by reference. Further, all documents, patent applications, and technical standards mentioned in this specification are incorporated herein by reference to the same extent as in a case where each document, each patent application, and each technical standard are specifically and individually described by being incorporated by reference.

## Claims

1. An information processing apparatus comprising:
at least one processor,
wherein the processor is configured to perform a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

2. The information processing apparatus according to claim 1,
wherein the identification information is different information between users different from each other, between buckets different from each other, or between regions different from each other, in a system.

3. The information processing apparatus according to claim 1 or 2,
wherein all magnetic tapes included in each of a plurality of storage pools belonging to one pool group are loaded in the same logical library among a plurality of logical libraries obtained by logically dividing a tape library.

4. The information processing apparatus according to any one of claims 1 to 3,
wherein, in a plurality of availability zones, pieces of identification information of the corresponding pool groups are the same information.

5. An information processing method executed by a processor of an information processing apparatus, the method comprising:
performing a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

6. An information processing program causing a processor of an information processing apparatus to execute a process comprising:
performing a control of recording identification information of a storage pool including a plurality of magnetic tapes in at least one of a management area of the magnetic tape belonging to the storage pool or a recording medium other than a magnetic tape that is provided in a magnetic tape cartridge including the magnetic tape, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.

7. A magnetic tape cartridge comprising:
a magnetic tape; and
a recording medium other than the magnetic tape,
wherein identification information of a storage pool which includes a plurality of magnetic tapes and to which the magnetic tape cartridge belongs is recorded in at least one of a management area of the magnetic tape or the recording medium, the storage pool being included in a plurality of storage pools in which the same data is recorded by being multiplexed with a multiplicity of one or more, and the identification information being different for each storage pool in a pool group including the plurality of storage pools and being the same information between storage pools in pool groups different from each other according to a multiplexing order of the storage pool.
